# EUROPÄISCHE PATENTSCHRIFT

(11) **EP 0 711 244 B1**
(45) Veröffentlichungstag und Bekanntmachung des Hinweises auf die Patenterteilung: **29.07.1998**
(21) Anmeldenummer: 95918495.3
(22) Anmeldetag: 26.05.1995
(51) Int. Cl.: B65G 47/46, B65G 47/96

(54) **WAGENKETTE FÜR EINE SORTIERANLAGE**
TROLLEY TRAIN FOR A SORTING INSTALLATION
CHAINE DE CHARIOTS POUR INSTALLATION DE TRIAGE

(30) Priorität: 08.06.1994 CH 797/94
(43) Veröffentlichungstag der Anmeldung: 15.05.1996
(73) Patentinhaber: GRAPHA-HOLDING AG, 6052 Hergiswil (CH)
(72) Erfinder: MAIER, Willi, CH-8302 Kloten (CH); ROHNER, Thomas, CH-8037 Zürich (CH)
(86) Internationale Anmeldenummer: CH9500119
(87) Internationale Veröffentlichungsnummer: WO9533669

(56) Entgegenhaltungen:
- EP-A- 0 540 464
- EP-A- 0 588 378
- FR-A- 916 431
- GB-A- 2 054 503

## Beschreibung

In der EP - A - 588 378 ist eine Sortieranlage mit einer endlosen Wagenkette bestehend aus miteinander gekuppelten Wagen beschrieben. Jeder Wagen hat am einen Ende Laufrollen und ist am gegenüberliegenden Ende mit dem nächstfolgenden Wagen gelenkig verbunden. Auf der Unterseite haben die Wagen elektrisch leitende Platten, die zusammen mit ortsfesten Spulen einen Linearmotor bilden zum Antrieb der Wagenkette. Dieser Lineramotor ist allerdings im Betrieb recht lärmig.

In der EP - A - 540 464 ist eine weitere Sortieranlage beschrieben, in welcher die Wagen vier Laufrollen sowie Seitenführungsrollen haben und über Gelenkstangen miteinander verbunden sind. Zum Antrieb ist unter jedem Wagen eine Zahnstange befestigt, die an mindestens einer Stelle der Wagenkette in eine umlaufende, angetriebene Kette eingreift. Diese Anlage kann so gebaut werden, dass sie im Betrieb weniger Lärm erzeugt, als die erstgenannte Anlage. Allerdings sind die Wagen aufwendig in der Herstellung.

Der vorliegenden Erfindung liegt die Aufgabe zugrunde, eine Wagenkette für eine Sortieranlage anzugeben, die im Betrieb ruhig läuft und preiswert herstellbar ist. Diese Aufgabe wird durch die Merkmalskombination gemäss Anspruch 1 gelöst.

Nachfolgend wird ein Ausführungsbeispiel der Erfindung anhand der Zeichnungen erläutert. Darin zeigt:
- Fig. 1: eine Seitenansicht von zwei Wagen einer Wagenkette,
- Fig. 2: eine Draufsicht auf die Wagenkette bei entferntem Aufbau, und
- Fig. 3: einen vergrösserten Schnitt durch eine Kupplung.

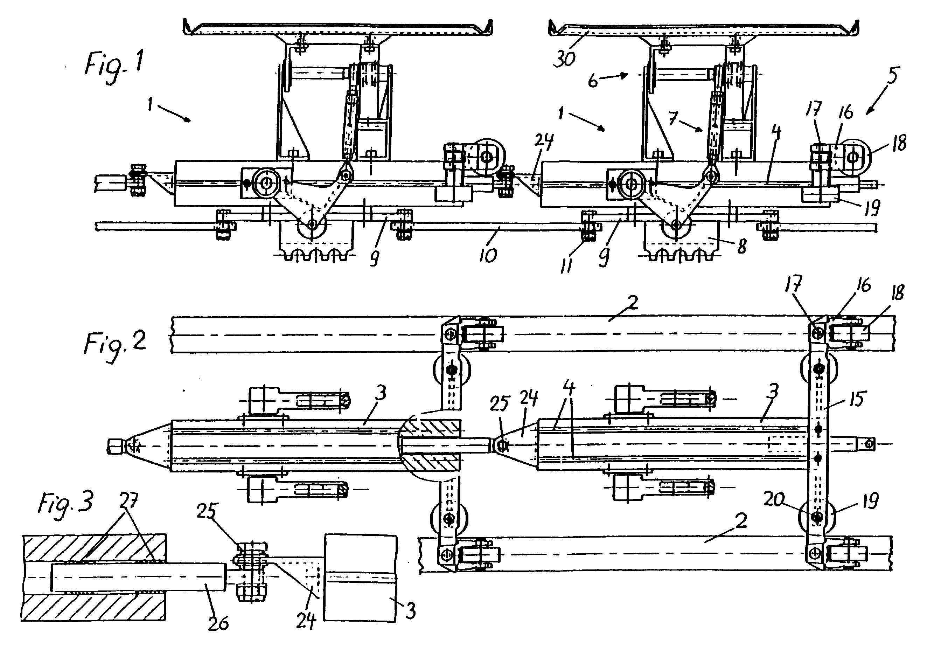

Die Wagenkette besteht aus einer endlosen Reihe miteinander gekoppelter Wagen 1, die auf zwei Rohren 2 (in Figur 1 nicht dargestellt) als Führungsschienen geführt sind. Jeder Wagen 1 hat einen Wagenkörper 3, der vorzugsweise als Rechteck-Hohlprofil ausgebildet ist mit hinterschnittenen Längsnuten 4 zum Befestigen des Fahrwerks 5, des Aufbaus 6, der Betätigungseinrichtung 7, sowie auf der Unterseite einer Zahnstange 8. Die Zahnstangen 8 haben in Längsrichtung des Wagens 1 Verlängerungen 9. Die Verlängerungen 9 benachbarter Wagen sind über Gelenkstangen 10 mit sphärischen Lagen direkt miteinander gekuppelt.

Jeder Wagen hat am einen Ende das Fahrwek 5. An den beiden Enden einer am Wagenkörper 3 befestigten Querstange 15 sind Gabeln 16 um Hochachsen 17 begrenzt schwenkbar befestigt. In den Gabeln 16 ist je eine Laufrolle 18 drehbar gelagert. Durch diese Ausbildung wirken die Laufrollen 18 als Lenkrollen, die in Kurven ohne seitliches Gleiten auf den Rohren 2 abrollen. Dadurch wird der trieb der Rollen 18 gering gehalten und eine gute Laufruhe erzielt. An der Querstange 15 sind ferner zwei Seitenführungsrollen 19 um Hochachsen 20 drehbar gelagert, die an den Innenseiten der Rohre 2 abrollen.

Am gegenüberliegenden Ende ist am Wagenkörper 3 ein Träger 24 mit einem sphärischen Lager 25 befestigt. Der Innenteil des Lagers 25 ist am freien Ende einer zylindrischen Stange 26 befestigt, die in Lagerbüchsen 27 längs verschiebbar und drehbar gelagert sind. Die Lagerbüchsen 27 sind im Stirnende des Wagenkörpers 3 des vorausgehenden Wagens eingesetzt, welches das Laufwerk 5 trägt. Die Längsverschiebbarkeit und Drehbarkeit der Stangen 26 ermöglicht den Längenausgleich im Übergang zu Steigungen und in Kurven sowie das Befahren wendelförmiger Steigungen. Durch die direkte Kupplung der Zahnstangen 8 mit den Gelenkstangen 10 braucht der Wagenkörper 3 keine Zug- und Druckkräfte zu übertragen. Er kann deshalb sehr leicht gebaut werden. Ausserdem ermöglicht die beschriebene Ausbildung, dass bei einer Änderung der Wagenteilung, z.B. wenn kürzere oder längere Schalen 30 der Aufbauten 6 montiert werden, in gewissen Grenzen, bestimmt durch die beidseits über die Lagerbüchsen 27 vorstehende Länge der Stangen 26, nur die Längen der Gelenkstangen 10 geändert zu werden brauchen. Dadurch ist die Anlage sehr flexibel.

Der Aufbau 6 mit der Lagerschale 30 und der Betätigungsvorrichtung 7 sind nicht Gegenstand dieser Anmeldung und werden deshalb nicht näher beschrieben. Sie können z.B. gemäss der EP - A - 540 464 ausgebildet sein.

## Patentansprüche

1. Wagenkette für eine Sortieranlage, bestehend aus mehreren miteinander gekuppelten Wagen (1), die je einen Wagenkörper (3) haben, der am einen Ende ein Laufwerk (5) mit zwei Laufrollen (18) und mindestens einer Seitenführungsrolle (19) aufweist, wobei zwei gegenüberliegende Enden zwei Wagenkörper (3) miteinander verbindende Kupplungsvorrichtungen (24 - 27) aufweisen, und wobei an der Unterseite des Wagenkörpers (3) eine Zahnstange (8) zum Antrieb der Wagenkette befestigt ist, dadurch gekennzeichnet, dass die Zahnstangen (8) benachbarter Wagen (1) durch Gelenkstangen (10) miteinander gekuppelt sind, und die Kupplungsvorrichtung (24 - 27) eine in einem ersten Wagenkörper (1) längs verschiebbar gelagerte Stange (26) umfasst, deren Ende mit einem benachbarten zweiten Wagenkörper (3) gelenkig verbunden ist.

2. Wagenkette nach Anspruch 1, wobei die Stange (26) mit dem zweiten Wagenkörper (3) über ein sphärisches Lager (25) verbunden ist.

3. Wagenkette nach Anspruch 1 oder 2, wobei die Stange (26) kreiszylindrisch ist und in Lagerbüchsen (27) im ersten Wagenkörper (3) längsverschiebbar und drehbar gelagert ist.

4. Wagenkette nach einem der Ansprüche 1 - 3, wobei die Gelenkstangen (10) mindestens einseitig über ein spärisches Lager (11) mit den Zahnstangen (8) gekuppelt sind.

5. Wagenkette nach einem der Ansprüche 1 - 4, wobei die Laufrollen (18) um Hochachsen (17) begrenzt schwenkbar gelagert sind.

6. Wagenkette nach einem der Ansprüche 1 - 5, wobei der Wagenkörper (3) als Rechteck-Hohlprofil mit hinterschnittenen Längsnuten (4) ausgebildet ist.

7. Wagenkette nach einem der Ansprüche 1 - 6, wobei das Laufwerk (5) zwei Seitenführungsrollen (19) aufweist.

## Claims

1. Trolley train for a sorting installation consisting of a plurality of trolleys (1) coupled to each other, each having a trolley body (3) which at one end has a running gear (5) with two running rollers (18) and at least one lateral guide roller (19), wherein two oppositely disposed ends of two trolley bodies (3) have coupling devices (24 - 27) that connect with each other, and wherein a toothed rack (8) is attached to the under side of the trolley body (3) for driving the trolley train, characterised in that the toothed racks (8) of adjacent trolleys (1) are coupled to each other by joint rods (10) and the coupling device (24 - 27) includes a rod (26) mounted for longitudinal displacement in a first trolley body (1) and having its end connected for articulation to an adjoining second trolley body (3).

2. Trolley train according to claim 1, wherein the rod (26) is connected to the second trolley body (3) by way of a spherical mounting (25).

3. Trolley train according to claim 1 or 2, wherein the rod (26) is of regular cylindrical shape and is mounted in bearing bushes (27) in the first trolley body (3) so as to be longitudinally displaceable and rotatable.

4. Trolley train according to one of claims 1 - 3, wherein the joint rods (10) are coupled at least at one end to the toothed racks (8) by way of a spherical mounting (11).

5. Trolley train according to one of claims 1 - 4, wherein the running rollers (18) are mounted for limited swivelling movement about vertical axes (17).

6. Trolley train according to one of claims 1 - 5, wherein the trolley body (3) is constructed as a rectangular hollow section with undercut longitudinal grooves (4).

7. Trolley train according to one of claims 1 - 6, wherein the running gear (5) has two lateral guide rollers (19).

## Revendications

1. Chaîne de chariots pour une installation de triage, composée de plusieurs chariots (1) accouplés entre eux et qui comportent chacun un corps de chariot (3), lequel présente à une extrémité un mécanisme de roulement (5) comportant deux galets de roulement (18) et au moins une roulette de guidage latérale (19), où deux extrémités opposées présentent des dispositifs d'accouplement (24 - 27) reliant ensemble deux corps de chariots (3), et où une crémaillère (8) destinée à l'entraînement de la chaîne de chariots est fixée au niveau de la face inférieure du corps de chariot (3), caractérisée en ce que les crémaillères (8) de chariots voisins (1) sont accouplées ensemble au moyen de bielles de guidage (10), et en ce que le dispositif d'accouplement (24 - 27) comprend une barre (26) disposée dans un premier corps de chariot (1) et qui peut coulisser sur sa longueur, l'extrémité de la barre étant reliée à un second corps de chariot voisin (3) de façon articulée.

2. Chaîne de chariots selon la revendication 1, dans laquelle la barre (26) est reliée au second corps de chariot (3) au moyen d'un palier sphérique (25).

3. Chaîne de chariots selon la revendication 1 ou 2, dans laquelle la barre (26) est de forme cylindrique et est disposée dans des coussinets (27) du premier corps de chariot (3) de façon à pouvoir coulisser sur la longueur et de façon orientable.

4. Chaîne de chariots selon l'une des revendications 1 à 3, dans laquelle les belles de guidage (10) sont accouplées aux crémaillères (8) au moins d'un côté par un palier sphérique (11).

5. Chaîne de chariots selon l'une des revendications 1 à 4, dans laquelle les galets de roulement (18) sont disposés autour d'axes verticaux (17) de façon à pivoter de façon limitée.

6. Chaîne de chariots selon l'une des revendications 1 à 5, dans laquelle le corps de chariot (3) est conçu comme un profil creux rectangulaire présentant des rainures longitudinales (4) avec contre-dépouilles.

7. Chaîne de chariots selon l'une des revendications 1 à 6, dans laquelle le mécanisme de roulement (5) présente deux roulettes de guidage latéral (19).
